**Europäisches Patentamt**

**European Patent Office**

**Office européen des brevets**

(19)

(11) Veröffentlichungsnummer: **0 224 785 B1**

(12) **EUROPÄISCHE PATENTSCHRIFT**

(45) Veröffentlichungstag der Patentschrift:
11.07.90

(51) Int. Cl.⁵: **H02K 5/15**

(21) Anmeldenummer: **86115930.9**

(22) Anmeldetag: **17.11.86**

(54) **Kleinmotor.**

(30) Priorität: **30.11.85 DE 8533802 U**

(43) Veröffentlichungstag der Anmeldung:
**10.06.87 Patentblatt 87/24**

(45) Bekanntmachung des Hinweises auf die Patenterteilung:
**11.07.90 Patentblatt 90/28**

(84) Benannte Vertragsstaaten:
**DE FR GB IT**

(56) Entgegenhaltungen:
**DE-U- 7 137 809**
**US-A- 3 070 409**
**US-A- 3 238 401**

(73) Patentinhaber: **Siemens Aktiengesellschaft,
Wittelsbacherplatz 2, D-8000 München 2(DE)**

(72) Erfinder: **Gleixner, Ronald, Hübnerweg 21,
D-8703 Ochsenfurt(DE)**
Erfinder: **Heidenfelder, Anton, Mittl.Heerbergstrasse 13,
D-8700 Würzburg(DE)**

## Beschreibung

Die Erfindung bezieht sich auf einen Kleinmotor mit axial stirnseitigen Lagerschilden, die mittels axial über die Motorgehäuselänge verlaufenden durch Formschluß in einem Lagerschild verdrehsicheren, Stiftschrauben-Verbindung ̅mittelbar gegeneinander verspannt sind, die axial über den einen Lagerschild mit einem freien Gewindebolzenende vorstehen, auf das eine Haltemutter zur Befestigung des Kleinmotors in einer Haltevorrichtung aufschraubbar ist; ein derartiger Kleinmotor ist durch eine offenkundige Vorbenutzung bekannt.

Bei dem bekannten Motor sind die Befestigungsmuttern jeweils in einer Vertiefung des einen Lagerschildes formschlüssig festgelegt. Die Stiftschrauben werden von der Stirnseite des anderen Lagerschildes her mittels ihres Schraubenkopfes in die formschlüssig fixierte Befestigungsmutter eingeschraubt. Auf die axial außen über die Befestigungsmutter herausragenden Gewindebolzenenden wird ein Halterahmen für den Motor bis zur einseitigen Anlage an dem zugewandten Lagerschild aufgesteckt und anschließend der Halterahmen jeweils durch Aufschrauben einer Haltemutter auf die Gewindebolzenenden gegen den Lagerschild festgezogen.

Um beim Aufschrauben der Haltemuttern ein unerwünschtes Losdrehen der für das gegenseitige mittelbare Festspannen der Lagerschilde bereits festgeschraubten Stiftschrauben mit Sicherheit verhindern und dazu mit einfachen Mitteln ein entsprechendes Mindestlosdrehmoment der Stiftschrauben gewährleisten zu können, ist erfindungsgemäß bei einem Kleinmotor der eingangs genannten Art der an dem einen Stiftschraubenende vorgesehene Schraubenkopf formschlüssig in dem einen Lagerschild gehalten und auf das andere, axial überstehende freie Gewindebolzenende eine Befestigungsmutter gegen den anderen Lagerschild aufgeschraubt.

Durch die erfindungsgemäße Anordnung und Fixierung der Stiftschrauben in dem einen Lagerschild und das gegenseitige Verspannen der beiden Lagerschilde von dem freien Gewindebolzenende der Stiftschrauben her kann bei einfacher, auch durch Fertigungsautomaten zu bewerkstelligender Montage gewährleistet werden, daß beim Aufschrauben der Haltemuttern die Stiftschrauben nicht in unerwünschter Weise aus ihrer die Lagerschilde gegenseitig verspannenden Lage herausgedreht werden.

Eine vorteilhafte Ausführung der Erfindung ist dadurch gekennzeichnet, daß der Schraubenkopf eine sternförmige Außenkontur und der eine Lagerschild eine Einlegevertiefung für den Schraubenkopf mit korrespondierender sternförmiger Gegenkontur aufweisen; durch die sternförmige Außenkontur des Schraubenkopfes wird eine möglichst große Formüberdeckung, eine weitgehende Toleranzunabhängigkeit und in für eine Automatenfertigung vorteilhafter Weise nur ein geringer Suchaufwand bei der richtigen Zuführung und Montage der Stiftschraube ermöglicht. Um einerseits ein einfaches, insbesondere maschinell zu bewerkstelligendes gegenseitiges Verspannen der Lagerschilde und die dazu notwendige Krafteinleitung auf die Festigungsmutter ermöglichen und andererseits eine sichere Festlegung des Halterahmens an der Stirnseite des Lagerschildes gewährleisten zu können, ist weiterhin vorgesehen, daß der andere Lagerschild eine Ausnehmung im Bereich der Befestigungsmutter zu deren frei zugänglichen und stirnseitig bündigen Anlage an dem anderen Lagerschild aufweist.

Die Erfindung wird im folgenden anhand eines schematisch dargestellten Ausführungsbeispiels in der Zeichnung näher erläutert; darin zeigen:

Fig. 1 eine axiale Draufsicht auf einen Kraftfahrzeug-Sitzverstellmotor,

Fig. 2 eine stirnseitige Draufsicht auf die rechte Stirnseite des Kleinmotors gemäß Fig.1 mit einer ersten Schraubenkopf-Kontur,

Fig. 3 eine stirnseitige Draufsicht auf die linke Stirnseite des Kleinmotors gemäß Fig.1,

Fig. 4 eine stirnseitige Draufsicht auf die rechte Stirnseite des Kleinmotors gemäß Fig.1 mit einer zweiten Schraubenkopf-Kontur,

Fig. 5 eine stirnseitige Draufsicht auf die rechte Stirnseite des Kleinmotors gemäß Fig.1 mit einer dritten Schraubenkopf-Kontur,

Fig. 6 eine stirnseitige Draufsicht auf die rechte Stirnseite des Kleinmotors gemäß Fig.1 mit einer vierten Schraubenkopf-Kontur,

Fig. 7 eine stirnseitige Draufsicht auf die rechte Stirneite des Kleinmotors gemäß Fig.1 mit einer fünften Schraubenkopf-Kontur.

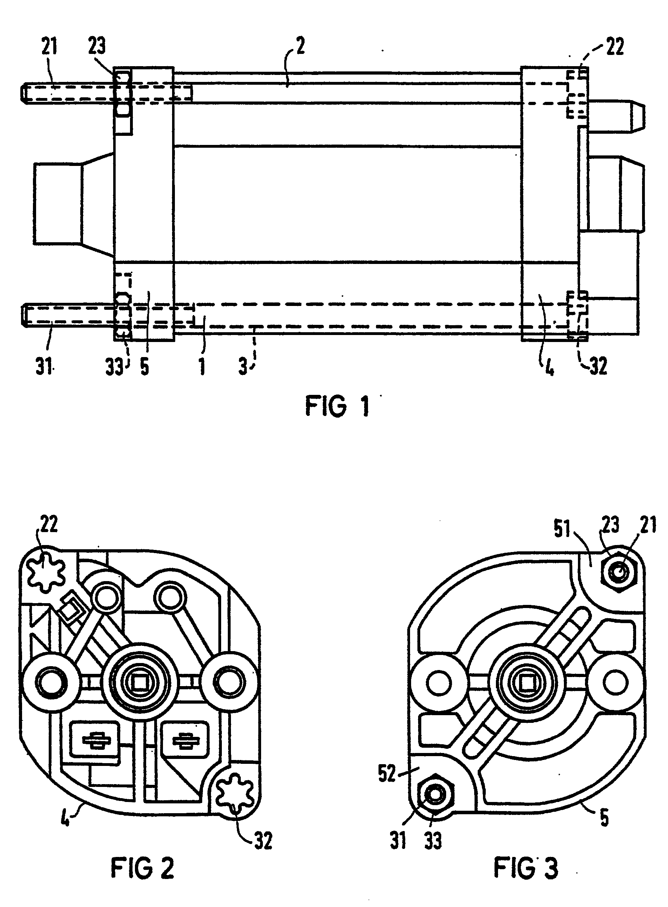

Fig.1 zeigt einen Kleinmotor für eine motorische Kraftfahrzeug-Sitzverstellung. Gegen die beiden Stirnseiten des Motorgehäuses 1 sind die beiden vorzugsweise aus Kunststoff spritzgegossenen Lagerschilde 4,5 mittels Stiftschrauben 2,3 festgespannt. Die Stiftschrauben 2,3 sind mittels ihrer angeformten Schraubenköpfe 22,32 in dem einen Lagerschild 4 formschlüssig festgelegt. Zur formschlüssigen Festlegung weisen die Schraubenköpfe 22,32 jeweils eine sternförmige Außenkontur und das eine Lagerschild 4 stirnseitig offene Einlegevertiefungen mit einer korrespondierenden sternförmigen Gegenkontur zur formschlüssigen Halterung des Schraubenkopfes und mit einer Bodendurchstecköffnung für die mit dem Schraubenkopf verbundene Stiftschraube auf.

Zum mittelbaren gegenseitigen Verspannen der beiden Lagerschilde 4,5 werden auf die durch die Bodendurchstecköffnungen beider Lagerschilde 4,5 durchgesteckten und mit ihrem Schraubenkopf 22,32 jeweils formschlüssig in die Einlegevertiefungen des einen Lagerschildes 4 eingelegten Stiftschrauben 2,3 von deren linken, axial über das andere Lagerschild 5 überstehenden Gewindebolzenenden 21,31 her Befestigungsschrauben 23,33 bis zur festen Anlage gegen den anderen Lagerschild 5 aufgeschraubt. Die Befestigungsschrauben 23,33 befinden sich in ihrer Endlage in Ausnehmungen 51,52 des anderen Lagerschildes 5, derart daß sie einerseits für ein Schraubwerkzeug gut zugänglich sind und andererseits axial bündig mit der übrigen Stirnfläche des anderen Lagerschildes 5 abschließen und somit die Anlage eines gegen den anderen Lagerschild 5 mittels Halteschrauben festzuschraubenden, hier nicht näher dargestellten Halterahmens für den Kleinmotor nicht behindern.

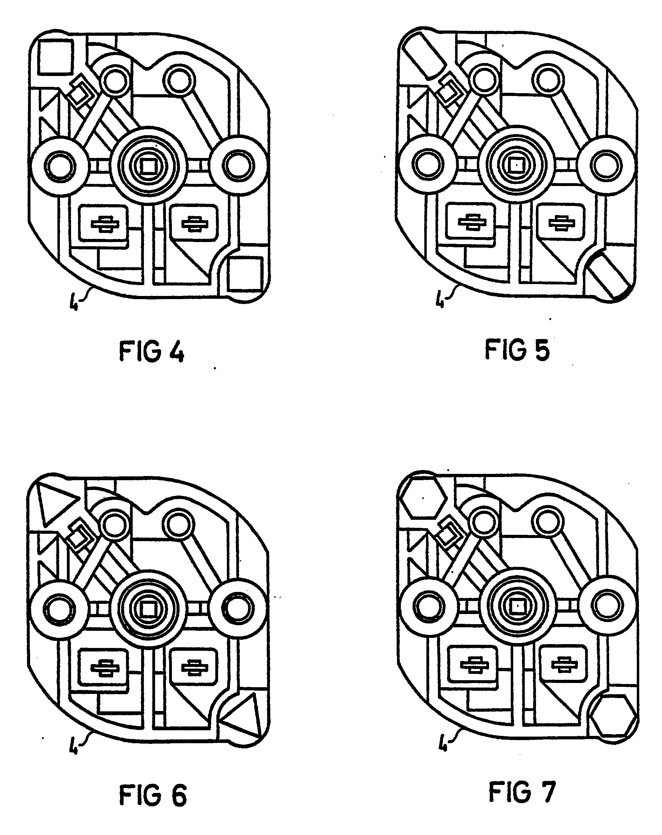

Fig.4 - Fig.7 zeigen als besonders zweckmäßige Schraubenkopf-Konturen, die aufgrund ihrer gebräuchlichen Kopfform einfach herstellbar sind und wegen ihrer Außenkontur die Übertragung eines hohen Anzugsmomentes gewährleisten, in Fig.4 einen viereckförmigen Schraubenkopf, in Fig.5 einen Schraubenkopf mit zwei verhältnismäßig langen Längsflanken, in Fig.6 einen dreieckförmigen Schraubenkopf und in Fig.7 einen sechseckförmigen Schraubenkopf.

## Patentansprüche

1. Kleinmotor mit axial stirnseitigen Lagerschilden (4, 5), die mittels einer axial über die Motorgehäuselänge verlaufenden, durch Formschluß in einem Lagerschild (4) verdrehsicheren Stiftschrauben-Verbindung mittelbar gegeneinander verspannt sind, wobei auf axial über den einen Lagerschild mit einem freien Gewindebolzenende (21, 31) vorstehende Stiftschrauben (2, 3) eine Haltemutter (23, 33) zur Befestigung des Kleinmotors in einer Haltevorrichtung aufschraubbar ist, dadurch gekennzeichnet, daß die an dem einen Stiftschraubenende vorgesehenen Schraubenköpfe (22, 32) jeweils formschlüssig in dem einen Lagerschild (4) gehalten und auf das andere, axial überstehende zur Befestigung des Kleinmotors in der Haltevorrichtung vorgesehene freie Gewindebolzenende (21, 31) eine Befestigungsmutter (23, 33) gegen den anderen Lagerschild (5) fest anliegend aufgeschraubt ist.

2. Kleinmotor nach Anspruch 1, dadurch gekennzeichnet, daß die Schraubenköpfe (22,32) eine sternförmige Außenkontur und der eine Lagerschild (4) jeweils eine Einlegevertiefung für den jeweiligen Schraubenkopf (22,32) mit korrespondierender sternförmiger Gegenkontur aufweisen (Fig.2).

3. Kleinmotor nach Anspruch 2, dadurch gekennzeichnet, daß eine sternförmige Außenkontur mit im wesentlichen parallel verlaufenden Sternspitzen-Seitenflanken vorgesehen ist.

4. Kleinmotor nach Anspruch 2 und/oder 3, dadurch gekennzeichnet, daß das Verhältnis des Durchmessers des Hüllkreises der Stenerspitzen zu dem Durchmesser des Grundkreises der Sternspitzen größer als 1,5 ist.

5. Kleinmotor nach Anspruch 1, dadurch gekennzeichnet, daß die Schraubenköpfe (22,32) eine viereckförmige Außenkontur und der eine Lagerschild (4) jeweils eine Einlegevertiefung für den jeweiligen Schraubenkopf (22,32) mit korrespondierender viereckförmiger Gegenkontur aufweisen (Fig.4).

6. Kleinmotor nach Anspruch 1, dadurch gekennzeichnet, daß die Schraubenköpfe (22,32) eine Außenkontur mit zwei Längsflanken und der eine Lagerschild (4) jeweils eine Einlegevertiefung für den jeweiligen Schraubenkopf (22,32) mit korrespondierender Gegenkontur mit zwei Längsflanken aufweisen (Fig.5).

7. Kleinmotor nach Anspruch 1, dadurch gekennzeichnet, daß die Schraubenköpfe (22,32) eine dreieckförmige Außenkontur und der eine Lagerschild (4) jeweils eine Einlegevertiefung für den jeweiligen Schraubenkopf (22,32) mit korrespondierender dreieckförmiger Gegenkontur aufweisen (Fig.6).

8. Kleinmotor nach Anspruch 1, dadurch gekennzeichnet, daß die Schraubenköpfe (22,32) eine sechseckförmige Außenkontur und der eine Lagerschild (4) jeweils eine Einlegevertiefung für den jeweiligen Schraubenkopf (22,32) mit korrespondierender sechseckförmiger Gegenkontur aufweisen (Fig.7).

9. Kleinmotor nach zumindest einem der Ansprüche 1-8, dadurch gekennzeichnet, daß der andere Lagerschild (5) jeweils eine Ausnehmung (51,52) im Bereich der Befestigungsmuttern (23,33) zu deren frei zugänglichen und stirnseitig bündigen Anlage an dem anderen Lagerschild (5) aufweist.

10. Kleinmotor nach zumindest einem der Ansprüche 1-9, dadurch gekennzeichnet, daß die Lagerschilde (4,5) als Gußteile mit eingegossener Einlegevertiefung für die Schraubenköpfe (22,32) und/oder Ausnehmung für die Befestigungsmuttern (23,33) ausgebildet sind.

## Claims

1. A low-power motor having end plates (4, 5) on its axial ends which are braced indirectly against one another by means of a connecting bolt or bolts extending axially over the length of the motor housing and secured against rotation by positive fit in one end plate (4), wherein a mounting nut (23, 33) can be screwed on to a threaded free end (21, 31) of a bolt projecting axially beyond one end plate to secure the low-power motor in a mounting, characterised in that the heads (22, 32) provided at one end of the bolts are held positively in one end plate (4) and that to secure the small motor in the mounting a retaining nut (23, 33) is screwed up tightly against the other end plate (5) on to the other axially projecting threaded free end of the bolt (21, 31).

2. A low-power motor according to claim 1, characterised in that the bolt head (22, 32) have a star-shaped outer profile and the one end plate (4) has a respective insertion recess for each head (22, 32) with a complementary star-shaped contour (Fig. 2).

3. A low-power motor according to claim 2, characterised in that a star-shaped outer profile is provided that has substantially parallel side flanks shaped as the points of a star.

4. A low-power motor according to claim 2 and/or claim 3, characterised in that the ratio of the diameter of the envelope circle of the star points to the diameter of the base circle of the star points is greater than 1.5.

5. A low-power motor according to claim 1, characterised in that the bolt heads (22, 32) have a quadrangular outer profile and the one end plate (4) has a respective insertion recess for each bolt head (22, 32) with a complementary quadrangular profile (Fig. 4).

6. A low-power motor according to claim 1, characterised in that the bolt heads (22, 32) have an outer profile with two side flanks and the one end plate (4) has a respective insertion recess for each bolt head (22, 32), with a complementary profile with two side flanks (Fig. 5).

7. A low-power motor according to claim 1, characterised in that bolt heads (22, 32) have a triangular outer profile and the one end plate (4) has a respective insertion recess for each bolt head (22, 32), with a complementary triangular profile (Fig. 6).

8. A low-power motor according to claim 1, characterised in that the bolt heads (22, 32) have a hexagonal outer profile and the one end plate (4) has a respective insertion recess for each bolt head (22, 32), with a complementary hexagonal profile (Fig. 7).

9. A low-power motor according to at least one of claims 1–8, characterised in that the other end plate (5) has a respective recess (51, 52) in the region of the retaining nuts (23, 33) such that these are freely accessible and can be fitted with their ends flush with the other end plate (5).

10. A low-power motor according to at least one of claims 1–9, characterised in that the end plates (4, 5) are in the form of castings with cast-in insertion recesses for the bolt heads (22, 32) and/or recesses for the retaining nuts (23, 33).

**Revendications**

1. Petit moteur comportant des flasques de support (4, 5) frontaux dans la direction axiale, qui sont fixés directement par serrage l'un contre l'autre à l'aide d'une liaison par boulons filetés, qui s'étend axialement sur la longueur du carter du moteur et qui réalise un blocage en rotation selon une liaison par formes complémentaires dans un premier flasque de support (4), des écrous de retenue (23, 33) servant à fixer le petit moteur dans un dispositif de maintien et pouvant être vissés sur des boulons filetés (2, 3) qui font saillie axialement par une extrémité libre (21, 31) de leur tige filetée au-delà du premier flasque de support, caractérisé par le fait que les têtes (22, 32) des boulons, qui sont prévues sur les extrémités respectives des boulons, sont maintenues selon une liaison par formes complémentaires dans le premier flasque de support (4), et qu'un écrou de fixation (23, 33) est vissé, de manière à s'appliquer fermement contre l'autre flasque de support (5), sur l'autre extrémité libre (21, 31) de la tige filetée, qui fait saillie axialement et qui est prévue pour la fixation du petit moteur dans le dispositif de maintien.

2. Petit moteur suivant la revendication 1, caractérisé par le fait que les têtes (22, 32) des boulons possèdent un contour extérieur en forme d'étoile et que le premier flasque de support (4) possède un enfoncement permettant l'insertion de la tête de boulon (22, 32) avec un contour opposé correspondant en forme d'étoile (figure 2).

3. Petit moteur suivant la revendication 2, caractérisé par le fait qu'il est prévu un contour extérieur en forme d'étoile, dont les pointes comportent des flancs latéraux sensiblement parallèles.

4. Petit moteur suivant la revendication 2 et/ou 3, caractérisé par le fait que le rapport du diamètre du cercle enveloppe des pointes de l'étoile au diamètre du cercle de base des pointes de l'étoile est supérieur à 1,5.

5. Petit moteur suivant la revendication 1, caractérisé par le fait que les têtes (22, 32) des boulons possèdent un contour extérieur carré et que le premier flasque de support (4) comporte un enfoncement permettant l'insertion de la tête respective (22, 32) du boulon, possédant un contour opposé carré correspondant (figure 4).

6. Petit moteur suivant la revendication 1, caractérisé par le fait que les têtes (22, 32) des boulons possèdent un contour extérieur comportant deux flancs longitudinaux et que le premier flasque de support (4) possède un enfoncement utilisé pour l'insertion de la tête de boulon (22, 32) possédant un contour opposé correspondant présentant deux flancs longitudinaux (figure 5).

7. Petit moteur suivant la revendication 1, caractérisé par le fait que les têtes (22, 32) des boulons possèdent un contour extérieur triangulaire et que le premier flasque de support (4) possède un enfoncement utilisé pour l'insertion de la tête de boulon (22, 32) possédant un contour opposé triangulaire correspondant (figure 6).

8. Petit moteur suivant la revendication 1, caractérisé par le fait que les têtes (22, 32) des boulons possèdent un contour extérieur hexagonal et que le premier flasque de support (4) possède un enfoncement pour l'insertion de la tête de boulon (22, 32) possédant un contour opposé hexagonal correspondant (figure 7).

9. Petit moteur suivant au moins l'une des revendications 1–8, caractérisé par le fait que l'autre flasque de support (5) possède un évidement (51, 52) au niveau des écrous de fixation (23, 33), pour leur application d'une manière librement accessible, de niveau avec la face frontale, sur l'autre flasque de support (5).

10. Petit moteur suivant au moins l'une des revendications 1–9, caractérisé par le fait que les flasques de support (4, 5) sont réalisées sous la forme de pièces moulées dans lesquelles est formé par moulage un enfoncement pour l'insertion des têtes (32, 32) des boulons et/ou un évidement pour les écrous de fixation (23, 33).

FIG 1

FIG 2

FIG 3

FIG 4

FIG 5

FIG 6

FIG 7